# EUROPEAN PATENT APPLICATION

(11) **EP 1 486 606 A1**
(43) Date of publication of application: **15.12.2004**
(21) Application number: 03703168.9
(22) Date of filing: 04.02.2003
(51) Int. Cl.: D06M 11/44, D06M 11/73, D06M 15/667, A44B 18/00, C08L 101/00, C08K 3/22

(54) **FLAME-RETARDANT MOLDED ARTICLE AND FABRIC PRODUCT**

(30) Priority: 05.02.2002 JP 2002027737; 05.02.2002 JP 2002027739
(71) Applicant: YKK Corporation, Chiyoda-ku, Tokyo 101-8642 (JP)
(72) Inventor: WAKABAYASHI, Masaki, Shimoniikawa-gun, Toyama 939-0657 (JP); TANAKA, Mamoru, Shim oniikawa-gun, Toyama 939-0626 (JP); ISHIBASHI, Akira, Toyama-shi, Toyama 931-8306 (JP); ICHIKAWA, Chikako, Kurobe-shi, Toyama 938-0031 (JP)
(74) Representative: Patentanwälte Leinweber & Zimmermann
(86) International application number: PCT/JP2003/001137
(87) International publication number: WO 2003/066956

(57) **Abstract**

A product (a molded article and a fabric product) which is made of a flame retardancy-imparting material or contains or/and is coated with the flame retardancy-imparting material, wherein the flame retardancy-imparting material comprises 100 parts by weight of a synthetic resin and 1 to 400 parts by weight of a flame-retardant containing an inorganic flame-retardant, preferably the inorganic flame-retardant which exhibits such a volume change as expansion and/or foaming at the time of combustion, more preferably at least one member selected from the group consisting of hydrated metallic compounds and thermally expansible graphite, the flame-retardant being dispersed in the synthetic resin. The molded article containing or/and coated with the flame retardancy-imparting material includes not only the case that the product is manufactured from a synthetic resin material containing the above-mentioned flame-retardant, but also the cases that a synthetic resin material containing the above-mentioned flame-retardant is contained in the product (including kneading, penetration, etc.) and that the surface (including a back surface) of the product is coated with a synthetic resin material containing the above-mentioned flame-retardant. Such flame-retardant products are useful as various molded articles and fabric products, such as surface fasteners, slide fasteners, and resin buttons.

## Description

### Technical Field

This invention relates to flame-retardant molded articles and fabric products. More particularly, this invention relates to flame-retardant molded articles and fabric products such as, for example, various fabric products and flame-retardant fastening products or parts like surface fasteners, slide fasteners, and resin buttons, which have excellent flame retardancy imparted thereto by manufacturing the products with a flame retardancy-imparting material comprising a synthetic resin and a flame-retardant incorporated therein or by manufacturing the products containing or/and coated with the flame retardancy-imparting material and which exhibit an afterflaming time of not more than 15 seconds, an afterflaming time of a flaming drip of not more than 5 seconds, and a char length of not more than 20 cm in the vertical test (heating time: 12 seconds) set forth in the Appendix F, Part I(b) specified in the U.S. Federal Regulations, Vol. 14 (14 CFR), Chapter 1, Part 25, §25.853.

### Background Art

Heretofore, as to the fabric products such as seats for airplanes, vessels, cars, trains, etc. and curtains, shading curtains, blackout curtains, thick curtains, blinds made of cloth, rugs, carpets, mats, artificial lawns, floor sheets made of a synthetic resin, sheets for construction, bedclothes, blankets, tents, extraordinary carrying-out bags, clothes, furniture covered with cloth, low partitions, and panels for exhibition to be used in hotels, department stores, high-rise buildings, underground centers, theaters, movie theaters, meeting places, hospitals, welfare institutions for the aged, kindergartens, etc., as well as fastening products or parts such as a surface fastener and a slide fastener to be used for fixation of these interior materials, outer covering materials, carpets, various covers, etc., for fixation of the displayed goods to the surface of a wall etc., and for fixation of wall covering materials and ceiling materials, the desirability of producing the products having high flame-retardant properties has been finding growing recognition.

However, since flame retardancy has not been given to the conventional fabric products and fastening products or parts such as surface fasteners and slide fasteners, it has been difficult to apply these products to the fields which require flame retardancy.

Generally, as a method of imparting flame retardancy to a resin material, a method of using a halogen-containing high polymer as a resin material itself and a method of adding a halogen-based flame retardant as a flame-retardant into a resin material are commonly and widely used. However, the halogen-containing materials are not desirable because they have a possibility of generating a detrimental gas, such as dioxin, at the time of combustion.

The present invention has been made in view of the problems described above. An object of the present invention is to provide a product of which matrix resin consists of a synthetic resin material and a product containing or/and coated with a synthetic resin material such as, for example, various fabric products and flame-retardant fastening products or parts like surface fasteners, slide fasteners, and resin buttons, which satisfy the requirements of the vertical test (heating time: 12 seconds) set forth in the Appendix F, Part I(b) specified in the U.S. Federal Regulations, Vol. 14 (14 CFR), Chapter 1, Part 25, §25.853 and exhibit a short afterflaming time and a short afterflaming time of a flaming drip, have the effect of suppressing the flame spread when a fire breaks out, have no possibility of generating a detrimental gas, such as dioxin, at the time of combustion unlike the conventional halogen-containing high polymers and the materials which contain the halogen-based flame-retardant, show high safety and exhibit sufficient flame-retardant properties.

### Disclosure of Invention

To accomplish the object mentioned above, the present invention provides a flame-retardant product, such as a molded article and a fabric product, which is made of a flame retardancy-imparting material or which contains or/and is coated with the flame retardancy-imparting material, characterized in that the above-mentioned flame retardancy-imparting material comprises a synthetic resin and a flame-retardant containing an inorganic flame-retardant, preferably an inorganic flame-retardant which exhibits such a volume change as expansion and/or foaming at the time of combustion, wherein the flame-retardant is contained in the synthetic resin in an amount of 1 to 400 parts by weight, based on 100 parts by weight of the synthetic resin, and is dispersed in the synthetic resin.

In accordance with a preferred embodiment of the present invention, there is provided a flame-retardant molded article which is made of the flame retardancy-imparting material or contains or/and is coated with the flame retardancy-imparting material, characterized in that the above-mentioned flame retardancy-imparting material comprises a synthetic resin and a flame-retardant contained therein in an amount of 1 to 400 parts by weight, based on 100 parts by weight of the synthetic resin, wherein the flame-retardant contains at least one member selected from the group consisting of hydrated metallic compounds and thermally expansible graphite and is dispersed in the synthetic resin.

In accordance with another preferred embodiment of the present invention, there is provided a flame-retardant fabric product which has a fibrous base fabric containing or/and coated with the flame retardancy-imparting material, characterized in that the above-mentioned flame retardancy-imparting material comprises a synthetic resin and a flame-retardant contained therein in an amount of 1 to 400 parts by weight, based on 100 parts by weight of the synthetic resin, wherein the flame-retardant contains at least one member selected from the group consisting of hydrated metallic compounds and thermally expansible graphite and is dispersed in the synthetic resin.

The term "a product (a molded article and a fabric product) containing or/and coated with a flame retardancy-imparting material" as used herein means not only the case that the product is manufactured from a synthetic resin material containing the above-mentioned flame-retardant, but also the cases that a synthetic resin material containing the above-mentioned flame-retardant is contained in the product (including kneading, impregnation, etc.) and that the surface (any surface of the obverse surface or/and reverse surface) of the product is coated with a synthetic resin material containing the above-mentioned flame-retardant, or the cases that these modes are combined complexly. Further, the term "containing" as used herein includes impregnation such as filling in the gaps or opening parts of a molded article, penetration into a fiber itself, penetration into the gaps between fibers or the like gaps, and penetration into the gaps of a base fabric made of fibers, and the term "coating" includes partial coating on a molded article, coating on each linear material or a fiber portion, and coating on a base fabric made of fibers.

The flame-retardant product (a molded article and a fabric product) of the present invention exhibits the flame retardancy excellent in self-extinguishing properties, i.e. an afterflaming time of not more than 15 seconds, an afterflaming time of a flaming drip of not more than 5 seconds, and a char length of not more than 20 cm in the vertical test (heating time: 12 seconds) set forth in the Appendix F, Part I(b) specified in the U.S. Federal Regulations, Vol. 14 (14 CFR), Chapter 1, Part 25, §25.853, and in a more preferred embodiment, an afterflaming time of not more than 12 seconds, an afterflaming time of a flaming drip of not more than 4 seconds, and a char length of not more than 16 cm. Accordingly, when a fire breaks out, it has not only the effect of suppressing the flame spread but also, unlike the conventional halogen-containing high polymers and the materials which contain the halogen-based flame-retardant, no possibility of generating a detrimental gas, such as dioxin, at the time of combustion because any halogen compound is not used as a material, and thus it is extremely excellent also in safety.

A preferred application embodiment of the flame-retardant molded article of the present invention is characterized in that the surface of the molded article is coated with the flame retardancy-imparting material by the lamination thereof. In a preferred example of the mode of coating the surface of a molded article with the flame retardancy-imparting material by the lamination thereof, for example, the molded article is a component part of a slide fastener, preferably a combined article comprising two or more component parts of a fastener tape, a row of coupling elements, stop members attached to the vertical ends of each row of coupling elements, a pin-and-box separator, a slider, and a reinforcing sheet of a slide fastener, more preferably all component parts. As a result, the flame retardancy is given to the whole slide fastener. Incidentally, one or more of coupling elements, upper and lower stop members, a pin-and-box separator, a slider, and a reinforcing sheet except a fastener tape may be made of other flame-retardant materials, such as metal and ceramics. A preferred example of the mode of coating a back surface of a base part of a molded article with the flame retardancy-imparting material by the lamination thereof is a molded separable fastener or surface fastener having a plurality of engaging elements projected from a base part thereof which will releasably engage with a plurality of engaging elements of an opposite surface fastener.

Further, a preferred application mode of the flame-retardant fabric product of the present invention is characterized in that the back surface of a base fabric made of fibers, such as a woven and/or knitted base fabric and a non-woven fabric, is impregnated or/and coated with the flame retardancy-imparting material as a back coating agent. Another preferred application mode is characterized in that the back surface of a base fabric made of fibers, such as a woven and/or knitted base fabric and a non-woven fabric, is coated with the flame retardancy-imparting material by the lamination thereof.

Such modes can be suitably applied also to a surface fastener or a fastener tape of a slide fastener, thereby imparting the flame retardancy to the whole fabric product.

### Brief Description of Drawings

Fig. 1 is a plan view illustrating an example of one basic form of a slide fastener made of a synthetic resin, to which the present invention is applied.
Fig. 2 is a partially cutaway plan view illustrating another form of the slide fastener made of a synthetic resin, to which the present invention is applied.
Fig. 3 is a fragmentary perspective view illustrating one example of a male surface fastener, to which the present invention is applied.
Fig. 4 is a fragmentary cross-sectional side view illustrating an example of the state of engagement between a male surface fastener and a female surface fastener, to which the present invention is applied.
Fig. 5 is a fragmentary cross-sectional view illustrating another example of the female surface fastener, to which the present invention is applied.
Fig. 6 is a fragmentary cross-sectional view illustrating another example of the male surface fastener.

### Best Mode for Carrying Out the Invention

Generally, a product made of a synthetic resin (a molded article and a fabric product) can not suppress the flame spread when a fire breaks out because it exhibits an afterflaming time exceeding 15 seconds, an afterflaming time of a flaming drip exceeding 5 seconds, and a char length over 20 cm in the vertical test (heating time: 12 seconds) set forth in the Appendix F, Part I(b) specified in the U.S. Federal Regulations, Vol. 14 (14 CFR), Chapter 1, Part 25, §25.853. The present inventors have made a diligent study to shorten the afterflaming time and the afterflaming time of a flaming drip and to decrease the char length in the above-mentioned vertical test (heating time: 12 seconds). As a result, it has been found that the outstanding flame retardancy can be given to a product (a molded article and a fabric product) by manufacturing the product from a flame-retardant synthetic resin material obtained by compounding and properly dispersing a specific flame-retardant in a synthetic resin, by blending a resin material with a flame retardancy-imparting material obtained by compounding and properly dispersing a specific flame-retardant in a synthetic resin and manufacturing the product from the resultant blend, or by treating a product with the flame retardancy-imparting material. As a result, the present invention has been perfected.

That is, the flame-retardant product (a molded article and a fabric product) of the present invention has an effect of suppressing the flame spread when a fire breaks out because it exhibits the afterflaming time of not more than 15 seconds, the afterflaming time of a flaming drip of not more than 5 seconds, and the char length of not more than 20 cm in the vertical test (heating time: 12 seconds) set forth in the Appendix F, Part I(b) specified in the U.S. Federal Regulations, Vol. 14 (14 CFR), Chapter 1, Part 25, §25.853.

Incidentally, in case a product exhibits the afterflaming time of not more than 15 seconds, the afterflaming time of a flaming drip of not more than 5 seconds, and the char length of not more than 20 cm in the above-mentioned vertical test (heating time: 12 seconds), it satisfies the acceptance criterion specified in the vertical test (heating time: 12 seconds) set forth in the Appendix F, Part I(b) specified in the U.S. Federal Regulations, Vol. 14 (14 CFR), Chapter 1, Part 25, §25.853, and the product has good flame retardancy as a refractory material.

Meanwhile, an exclusive test apparatus is used for the vertical test.

As the above-mentioned flame-retardant, at least one inorganic flame-retardant is used. Preferably, a flame-retardant containing at least one inorganic flame-retardant which exhibits a volume change at the time of combustion (in the case of a fabric product, the inorganic flame-retardant which exhibits such a volume change as expansion and/or foaming at the time of combustion, preferably at the rate of 0.2-2 cc/1 cm² of a base fabric made of fibers), for example, thermally expansible graphite, is used. The expansion starting temperature of the thermally expansible graphite can be properly selected depending on a synthetic resin material used as a base material or the melting point of the base fabric made of fibers. In the case of a base fabric made of fibers, the expansion starting temperature is desired to be lower than the melting point of the base fabric from the viewpoint of retaining the shape of the base fabric made of fibers and preventing the fusion and dropping of the base fabric. Moreover, a preferred flame-retardant contains at least one member selected from the group consisting of hydrated metallic compounds and the thermally expansible graphite.

As the hydrated metallic compounds, zirconium hydroxide, aluminum hydroxide, magnesium hydroxide, calcium hydroxide, etc. may be cited.

As the other flame-retardant which can be add to the flame retardancy-imparting material, for example, silica, aluminum oxide, iron oxide, titanium oxide, manganese oxide, magnesium oxide, zirconium oxide, zinc oxide, molybdenum oxide, cobalt oxide, bismuth oxide, chromium oxide, tin oxide, antimony trioxide, antimony pentoxide, nickel oxide, copper oxide, tungsten oxide, aluminum, iron, titanium, manganese, zinc, molybdenum, cobalt, bismuth, chromium, nickel, copper, tungsten, tin, antimony, zinc metaborate, barium metaborate, zinc carbonate, magnesium carbonate, calcium carbonate, barium carbonate, zirconium hydroxide, aluminum hydroxide, magnesium hydroxide, calcium hydroxide, zinc borate, nitrided guanidine, zirconium compounds, decabromodiphenyl oxide, octabromodiphenyl oxide, tetrabromobisphenol A, bis(tribromophenoxy) ethane, tetrabromobisphenol A epoxy oligomer, tetrabromobisphenol A carbonate oligomer, ethylene-bis-tetrabromophthalimide, ethylene-bis-pentabromodiphenyl, tris(tribromophenoxy)triazine, tribromoneopentyl alcohol, tetrabromobisphenol A-bis(2,3-dibromopropyl ether), poly-dibromophenylene ether, brominated polystyrene, hexabromobenzene, tetrabromobisphenol S, ammonium polyphosphate, tris(tribromoneopentyl)phosphate, octabromotrimethylphenyl indane, tetrabromophthalate, tetrabromophthalate diol, tetrabromophthalate ester, tetrabromophthalate disodium, tetrachlorophthalic anhydride, tribromophenol, dibromophenol, dibromo-m-cresol, dibromoneopentyl glycol, poly(pentabromobenzyl polyacrylate), chlorendic acid, chlorendic anhydride, brominated phenol, dibromocresyl glycidyl ether, vinyl bromide, triphenyl phosphate, tricresyl phosphate, trixylenyl phosphate, triethyl phosphate, cresyl diphenyl phosphate, xylenyl diphenyl phosphate, cresyl bis(di-2,6-xylenyl) phosphate, 2-ethylhexyl diphenyl phosphate, dimethyl phosphate, resorcinol bis(diphenyl) phosphate, bisphenol A bis(diphenyl) phosphate, bisphenol A bis(dicresyl) phosphate, resorcinol bis(di-2,6-xylenyl) phosphate, tris(chloroethyl) phosphate, tris(chloropropyl) phosphate, tris(dichloropropyl) phosphate, tris(tribromoneopentyl) phosphate, diethyl-N,N-bis(2-hydroxyethyl) aminomethyl phosphonate, red phosphorus, phosphate, ammonium phosphate, melamine polyphosphate, melamine phosphate, metal phosphate, guanidine phosphate, triazine-based flame-retardants, low-melting glass-based flame-retardants, silicon-based flame-retardants, etc. may be cited. These flame-retardants may be used either singly or in the form of a combination of two or more members.

Among other flame-retardants enumerated above, it is particularly desirable to use in combination at least one of each of a hydrated metallic compound, such as aluminum hydroxide, magnesium hydroxide, and calcium hydroxide, of which toxicity to a human body is very low and which has, unlike the conventional halogen-containing high polymers and the materials which contain the halogen-based flame-retardant, no possibility of generating a detrimental gas, such as dioxin, at the time of combustion and has the comparatively large endotherm; the thermally expansible graphite in which the substances penetrated between layers at the time of an oxidation treatment evaporate and which extremely expands in the direction of C axis of a crystal to form heat insulating layers at the time of combustion; and a phosphorus compound, such as melamine polyphosphate, melamine phosphate, ammonium polyphosphate, and guanidine phosphate, which has the flame-retardant mechanism such as the formation of voluminous, porous carbonized layers (insulating layers) having the high endotherm, the formation of fused glassy and dense carbonized layers (insulating layers), and trap of active radicals. It is particularly desirable to use three species; magnesium hydroxide, thermally expansible graphite, and melamine polyphosphate in combination.

Further, it is desirable that the flame retardancy-imparting material should contain the flame-retardant having the particle diameter of not more than 800 µm, preferably not more than 500 µm. The particle diameter of the flame-retardant larger than 800 µm is not desirable because the dispersibility thereof in a synthetic resin will become poor and the physical properties of the resultant flame-retardant synthetic resin material will be remarkably decreased. If the particle diameter is not more than 800 µm, a large amount of the flame-retardant can be uniformly dispersed in the material, without impairing the physical properties thereof. Furthermore, it is desirable that the flame retardancy-imparting material should contain the flame-retardant having the particle diameter smaller than the mesh size of a base fabric made of fibers, because the flame-retardant having the particle diameter smaller than the mesh size will pass through the mesh even when the base fabric is coated with the flame retardancy-imparting material only on one side and, as a result, the material will be able to acquire more powerful flame retardancy.

As the above-mentioned synthetic resin, any resin may be used and both a thermoplastic resin and a thermosetting resin may be used.

As the thermoplastic resin, for example, low-density polyethylene, medium-density polyethylene, high-density polyethylene, polypropylene, polystyrene, polyurethane, polyvinyl acetate, polyvinyl chloride, polyvinylidene chloride, polyacrylic acid, polyacrylate, polyacrylic ester, polybutadiene, polyisoprene, ethylene propylene rubber, butyl rubber, acrylonitrile-butadiene-styrene copolymer, acrylonitrile-ethylene propylene rubber-styrene copolymer, ethylene-vinyl acetate copolymer, etc. may be cited. These thermoplastic resins may be used either singly or in the form of a combination of two or more members.

In case the synthetic resin is a thermoplastic resin, its average molecular weight is desired to be in the range of 1,000 to 500,000. If the molecular weight is lower than 1,000, it will be difficult to sufficiently incorporate a flame-retardant therein. Conversely, the molecular weight higher than 500,000 is not preferred because the processability thereof will be impaired remarkably. Further, as to a fabric product, when a base fabric made of fibers is impregnated with or coated on at least one side with the flame retardancy-imparting material which uses a thermoplastic resin having a molecular weight lower than 1,000 or a thermoplastic resin having a molecular weight higher than 500,000, a feeling of touch and a feeling of use of the product itself tend to be impaired.

As the thermosetting resin, for example, a cross-linked polyurethane, a cross-linked polyester, a cross-linked epoxy resin, a cross-linked acrylic resin, a cross-linked copolymerized nylon resin, etc. may be cited. These thermosetting resins may be used either singly or in the form of a combination of two or more members.

In case the synthetic resin is a thermosetting resin, its molecular weight between cross-linkages is desired to be in the range of 50 to 50,000. If the molecular weight between cross-linkages is lower than 50, it will be difficult to sufficiently incorporate a flame-retardant therein. Conversely, the molecular weight between cross-linkages higher than 50, 000 is not preferred because the processability thereof will be impaired remarkably. Further, as to a fabric product, when a base fabric made of fibers is impregnated with or coated on at least one side with the flame retardancy-imparting material which uses a thermosetting resin having a molecular weight between cross-linkages lower than 50 or a thermosetting resin having a molecular weight between cross-linkages higher than 30,000, a feeling of touch and a feeling of use of the product itself tend to be impaired.

Among other synthetic resins enumerated above, a cross-linked polyurethane which is given by curing after application of a polyester resin and an isocyanate-based curing agent in combination is particularly suitable as a back coating agent for fabric products from the viewpoints of that, unlike the halogen-containing high polymers, it does not generate a detrimental gas, such as dioxin, at the time of combustion, that it is inexpensive and mass-producible industrially, and that it is lightweight and exhibits comparatively good weatherability. When the synthetic resin is used for a fastener tape and element parts of a slide fastener, a polyamide type synthetic resin (nylon 6, nylon 66, nylon 11, nylon 12, etc. ) , a polyester type synthetic resin (polyethylene terephthalate, polybutylene terephthalate, etc.), and a hydrocarbon type synthetic resin (polyethylene, polypropylene, etc.) are suitable because, unlike the halogen-containing high polymers, they do not generate a detrimental gas, such as dioxin, at the time of combustion and satisfy the mechanical properties and the sliding durability which are required of a slide fastener. Further, when the flame retardancy-imparting material is used for a fastener tape or a surface fastener so as to be coated or/and impregnated therewith or is used as a back coating agent of a fabric product, a cross-linked polyurethane which is given by curing after application, coating or/and impregnation with a polyester resin and an isocyanate-based curing agent in combination is suitable from the viewpoints of that it does not generate a detrimental gas, such as dioxin, at the time of combustion, that it is inexpensive and mass-producible industrially, and that it exhibits comparatively good weatherability.

When the flame-retardant is dispersed in a synthetic resin, there is a possibility that the synthetic resin or its components (for example, a polyester resin and an isocyanate-based curing agent which are components for obtaining a cross-linked polyurethane, or the like) may react with the flame-retardant chemically. In such a case, it is desirable that the surface of the flame-retardant should be coated with a surface-treating agent which does not react with a synthetic resin.

As the above-mentioned surface-treating agent, any surface-treating agent may be used. For example, low-density polyethylene, medium-density polyethylene, high-density polyethylene, polypropylene, polystyrene, polyurethane, polyvinyl acetate, polyvinyl chloride, polyvinylidene chloride, polyacrylic acid, polyacrylate, polyacrylic ester, polybutadiene, polyisoprene, ethylene propylene rubber, butyl rubber, acrylonitrile-butadiene-styrene copolymer, acrylonitrile-ethylene propylene rubber-styrene copolymer, ethylene-vinyl acetate copolymer, water-glass, low-melting glass, metallic soap, basic metallic soap, fatty acid, etc. may be cited. These surface-treating agents may be used either singly or in the form of a combination of two or more members. Among other surface-treating agents enumerated above, it is particularly desirable to select the surface-treating agent which, unlike a halogen-containing surface-treating agent, does not generate a detrimental gas, such as dioxin, at the time of combustion and exhibits high compatibility with a synthetic resin.

The compounding ratio of the flame-retardant in the synthetic resin is desired to be in the range of 1 to 400 parts by weight, preferably 20 to 200 parts by weight of the flame-retardant per 100 parts by weight of the synthetic resin.

If the amount of the flame-retardant to be incorporated in the synthetic resin is less than 1 part by weight, based on 100 parts by weight of the synthetic resin, it will be difficult to impart sufficient flame retardancy to the resultant flame-retardant synthetic resin material. Conversely, the amount of the flame-retardant exceeding 400 parts by weight is not desirable because the mechanical properties of the material will be impaired remarkably.

In the present invention, besides the components mentioned above, various additives such as a coloring agent and a flame-retardant assistant may be added to the material, if needed.

As the coloring agent mentioned above, any coloring agent may be used. For example, titanium dioxide, cobalt oxide, ultramarine, Prussian blue, red oxide, vermilion, basic lead carbonate, red lead oxide, chrome yellow, strontium chromate, titanium yellow, titanium black, zinc chromate, iron black, molybdenum red, molybdenum white, litharge, lithopone, carbon black, emerald green, guinget's green, cadmium yellow, cadmium red, cobalt blue, azo pigments, phthalocyanine blue, isoindolinone, quinacridone, dioxazine violet, perinone, perylene, etc. may be cited. These coloring agents may be used either singly or in the form of a combination of two or more members.

As the flame-retardant assistant, melamine, a triazine-based compound, pentaerythritol, polyols, etc. may be cited. These flame-retardant assistants may be used either singly or in the form of a combination of two or more members.

Besides, as occasion demands, various additives such as, for example, an antioxidant, an ultraviolet light absorber, an antistatic agent, a lubricant, and a compatibilizing agent for increasing the affinity of the flame-retardant to the synthetic resin may be added to the material.

The flame-retardant product (a molded article and a fabric product) of the present invention is characterized in that it contains the flame-retardant dispersed in a synthetic resin of a matrix resin or dispersed in the surface part thereof and exhibits the afterflaming time of not more than 15 seconds, the afterflaming time of a flaming drip of not more than 5 seconds, and the char length of not more than 20 cm in the vertical test (heating time: 12 seconds) set forth in the Appendix F, Part I(b) specified in the U.S. Federal Regulations, Vol. 14 (14 CFR), Chapter 1, Part 25, §25.853.

Such a flame-retardant resin material can be obtained by melting and kneading a synthetic resin with a flame-retardant and, as occasion demands, with other additives, by means of a well-known kneading apparatus such as a single-screw extruder, a twin-screw extruder, a Banbury mixer, a kneader, a roll, etc. when the matrix resin is a thermoplastic resin. As the forming method, various forming methods such as extrusion molding, calendering, injection molding, and press molding may be used to obtain a molded article. When the matrix resin is a thermosetting resin, for example, a cross-linked polyurethane resin obtained by mixing a polyester resin with an isocyanate-based curing agent which is a curing agent, a flame-retardant and other additives, if needed, are previously dispersed in the polyester resin prior to cross-linking thereof. The polyester resin may be in the liquid state in itself at normal temperature or an organic-solvent solution. As the similar thermosetting resin, for example, two-pack adhesives such as a polyether resin and an isocyanate-based curing agent, an epoxy resin and an amine-based curing agent, an acrylic resin and a melamine-based curing agent, or their blend, and copolymerized nylon-based one-pack adhesives, etc. may be cited.

When the article is produced by coating or/and impregnating a base fabric made of fibers or a previously molded article with the flame retardancy-imparting material (the flame-retardant resin material), if the above-mentioned flame retardancy-imparting material is in the state of liquid, paste, or heated melt, the flame retardancy-imparting material may be applied to the base fabric made of fibers or the molded article as it is for coating or/and impregnation. Otherwise, the flame retardancy-imparting material shaped to a sheet-like form etc. may be laminated on the base fabric or the molded article by pressing thereon under heating or by adhesion thereto.

As the forming method, various forming methods such as casting and application may be employed to obtain a formed product. Further, the same flame retardancy as the flame-retardant resin material can be given to the product itself by laminating the formed product obtained by the above-mentioned forming method on the whole surface or one surface (for example, a back surface) of a product (a molded article or fabric product).

When the molded article is a fastener tape or a surface fastener, the whole thereof may be coated or/and impregnated with the flame-retardant resin material, and also the back surface of the base part of the molded article may be coated or/and impregnated with the flame-retardant resin material as a back coating agent to impart the flame retardancy to the molded article. Furthermore, if a fabric product is impregnated or/and coated with the flame-retardant resin material as a back coating agent, the same flame retardancy as the flame-retardant resin material can be given to the fabric product simultaneously with fixation of the base part.

By using various woven and/or knitted base fabrics and nonwoven fabrics impregnated or/and coated with the above-mentioned flame retardancy-imparting material as a back coating agent or laminated therewith on the back surface of the base fabric made of fibers, seats, interior materials, outer covering materials, carpets, various covers, etc. for airplanes, vessels, cars, trains, etc., which require the flame retardancy, and flameproof curtains, shading curtains, blackout curtains, thick curtains, blinds made of cloth, rugs, carpets, mats, artificial lawns, floor sheets made of a synthetic resin, sheets for construction, bedclothes, blankets, tents, extraordinary carrying-out bags, cloths, furniture covered with cloth, low partitions, panels for exhibition, etc. to be used in hotels, department stores, high-rise buildings, underground centers, theaters, movie theaters, meeting places, hospitals, welfare institutions for the aged, kindergartens, etc. may be finished as the products having the flame retardancy imparted thereto.

Further, the surface fastener obtained by impregnating or/and coating the back surface of a surface fastener made of fibers and having a plurality of engaging elements projected from a base fabric made of fibers, such as a woven and/or knitted base fabric and a non-woven fabric, which will make engagement and disengagement with an opposite surface fastener, with the flame retardancy-imparting material as a back coating agent, the surface fastener having the flame retardancy-imparting material (the flame retardant synthetic resin material) laminated on the back surface thereof, or the slide fastener or surface fastener made of the flame retardancy-imparting material may be advantageously used for fixation of seats, interior materials, outer covering materials, carpets, various covers, etc., which require the flame retardancy, in airplanes, vessels, cars, trains, etc., for fixation of the displayed goods to the surface of a wall etc., for fixation of wall covering materials and ceiling materials, and for fixation of various flame-retardant fabric products mentioned above.

Now, some examples of the mode of application of the present invention to individual products will be specifically described below with reference to the accompanying drawings.

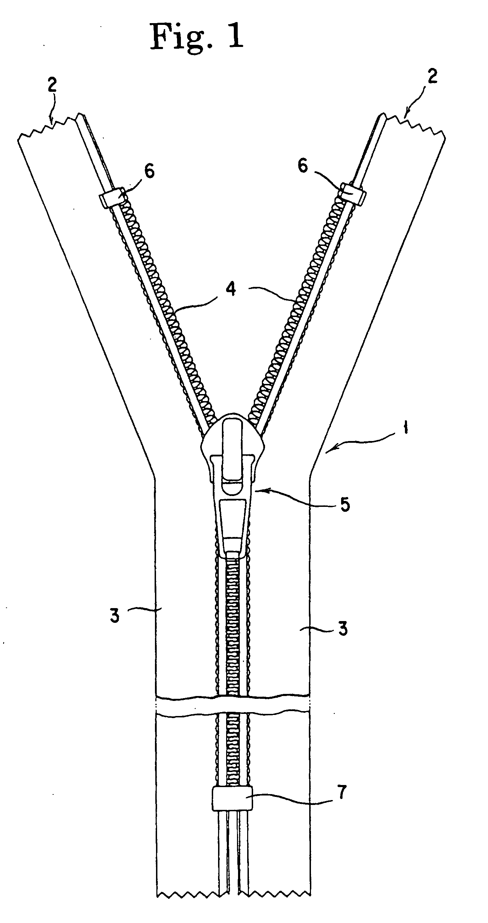

Fig. 1 illustrates a slide fastener 1 which is used for opening and closing the opening in a garment or a bag, for example, and depicts the form of a product having the upper and lower ends of laterally paired fastener stringers 2 cut off. The fastener stringers 2 are composed of fastener tapes 3 made of a synthetic resin and a row of coupling elements (coiled coupling elements) 4 made of a synthetic resin attached fast to each of the opposed longitudinal edges of the fastener tapes 3. As the fastener tapes 3, any type of tapes besides that made from a synthetic resin sheet, for example, those formed by weaving and/or knitting synthetic resin fibers or manufactured from a non-woven fabric may also be used. The coupling elements 4 are known in various forms such as, for example, those of the type obtained by injection molding the individual coupling elements and simultaneously attaching them fast to the edges of the fastener tapes, the continuous coupling elements such as the coiled coupling element obtained by winding a monofilament made of a synthetic resin in the shape of a coil and the so-called zigzag coupling element obtained by alternately connecting vertically in a zigzagging pattern in the longitudinal direction the portions bent in the shape of a letter U in the lateral direction in a plane, and the extrusion molded coupling elements obtained by attaching the opposite end portions of the individual coupling elements by means of extrusion molding to the two separate connecting cords (core cords) laid parallel to each other in the longitudinal direction thereby forming a composite resembling a ladder and bending the composite in the shape of a letter U around the longitudinal center line thereof. In the case of the coiled coupling elements, they include a core cord and a sewing thread as the component parts thereof. Reference numeral 5 denotes a slider which is slidable along the opposed rows of coupling elements for making and breaking engagement of the coupling elements. Further, upper stop members 6 are attached respectively to the upper ends of the rows of coupling elements 4 attached fast to fastener tapes 3 of fastener stringers 2 and a lower stop member 7 is attached to the lower ends thereof.

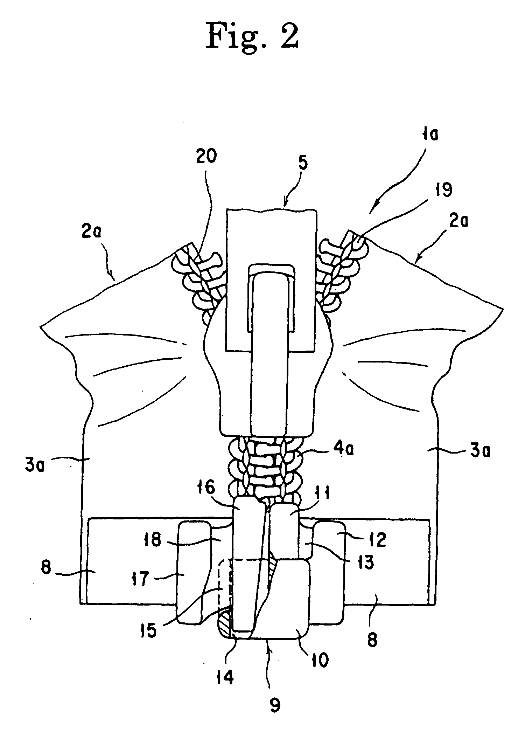

Fig. 2 illustrates an open-link type slide fastener 1a. To the lower end portions of fastener tapes 3a of fastener stringers 2a, reinforcing sheets (taffeta) 8 are respectively welded through the medium of an adhesive layer (not shown). A box member 10 of a pin-and-box separator 9 is attached to the inner edge of one of the opposed reinforcing sheet 8 and a butterfly rod or pin 16 is attached to the inner edge of the other reinforcing sheet 8. The box member 10 is formed integrally with a guide projecting part 12 adjoining the box member 10 and a box rod 11 and a groove 13 is formed as interposed between the box rod 11 and the guide projecting part 12 so as to admit therein the lower end part of the slider 5 by slippage. Similarly, a guide groove 18 is formed between the butterfly rod 16 and a guide ridge 17 formed integrally with the adjoining butterfly rod 16. A butterfly rod inserting hole 14 is formed as pierced in the vertical direction in the left side portion of the box member 10 and a lateral groove 15 is formed on the outer wall of the butterfly rod inserting hole 14. When the butterfly rod 16 is inserted into the butterfly rod inserting hole 14 of the box member 10, therefore, the insertion can be smoothly carried out because the inner side of the lower end of the guide ridge 17 slide on the edge of the lateral groove 15 of the box member 10 so as to guide the butterfly rod 16. With reference to Fig. 2, reference numeral 19 denotes a core cord which is inserted in the longitudinal direction through the empty space inside the spiral of the coiled coupling element 4a and reference numeral 20 denotes a sewing thread sewing the core cord 19 and the coiled coupling element 4a along the longitudinal edge of the fastener tape 3a.

As the modes for applying the present invention to the slide fasteners 1, 1a mentioned above, as to the fastener tapes 3, 3a and the reinforcing sheet 8 first, the flame-retardant resin material mentioned above may be formed into a tape form. Alternatively, the flame retardancy-imparting material comprising a synthetic resin material and a flame retardant incorporated therein as mentioned above may be applied to a tape formed from another resin or a suitable resin material such as a biodegradable resin to cover it or the sheet material of the flame retardancy-imparting material may be laminated on the formed tape. Further, the fastener tape and the reinforcing sheet may be manufactured by weaving or knitting the fibers made of the flame-retardant resin material mentioned above or by applying the flame retardancy-imparting material mentioned above to a tape manufactured by weaving or knitting fibers made of another resin or a suitable resin material such as a biodegradable resin to impregnate or cover it with the flame retardancy-imparting material. As to the coupling elements 4, 4a, the upper and lower stop members 6, 7, the pin-and-box separator 9, and the slider 5, they may also be formed from the flame-retardant resin material mentioned above or may be manufactured by applying the flame retardancy-imparting material mentioned above to the products formed from the other resin material to cover them with the flame retardancy-imparting material. It is preferable that at least one of these components, preferably two or more thereof, more preferably all of the components of a slide fastener should be made of the flame-retardant material or be treated with the flame retardancy-imparting material or the combined products thereof. As a result, the slide fastener can be fireproofed. Incidentally, as to the coupling elements 4, 4a, the upper and lower stop members 6, 7, the pin-and-box separator 9, and the slider 5 which require the mechanical strength or other properties, one or more of these components may be manufactured from the other flame-retardant material, such as metal and ceramics.

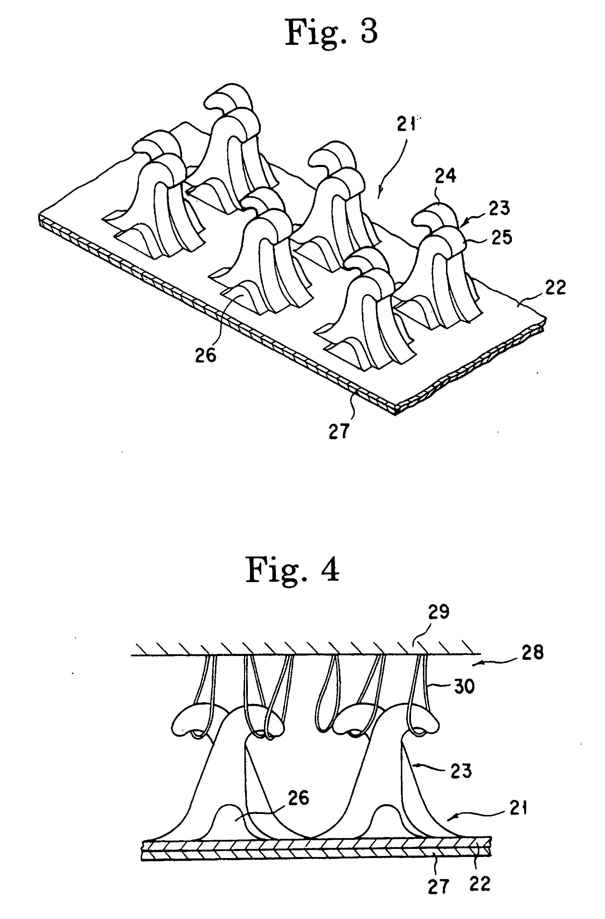

Next, an embodiment of applying the present invention to the surface fastener is shown in Fig. 3 and Fig. 4.

The male surface fastener 21 shown in Fig 3 is manufactured by integrally molding a base part 22 and a multiplicity of hook-like engaging elements 23 projected from the base part with a resin material. The engaging elements 23 comprises a pair of adjacent hook pieces 24, 25 having the hooked leading ends thereof pointed in the mutually opposite directions and are formed astride the reinforcing ribs 26 which are arranged in parallel with each other at a prescribed interval in the longitudinal direction of the base part 22. On the back surface of the base part 22, a flame-retardant resin layer 27 is formed by applying the flame retardancy-imparting material comprising a synthetic resin material and a flame-retardant incorporated therein as mentioned above to cover the back surface or by laminating a sheet material of the flame retardancy-imparting material on the back surface. The base part 22 and the engaging elements 23 mentioned above may be molded from various resins which have been heretofore used, water-soluble resins, biodegradable resins, etc.

Although in this embodiment the flame-retardant resin layer 27 is formed on the back surface of the base part 22, the male surface fastener 21 may be wholly coated with the flame retardancy-imparting material mentioned above. Alternatively, the male surface fastener itself may be molded from the flame retardant resin material. Further, it is possible to form a water-soluble resin layer which exhibits the adhesive properties by absorption of water on the back surface of the base part and to utilize this layer as an adhesive layer.

This male surface fastener 21 and a female surface fastener 28 which have a multiplicity of looped engaging elements 30 projected from the obverse side of a base part 29 manufactured by weaving or knitting fibers are brought into fast engagement by the fact that the hooked engaging elements 23 are caught on the looped engaging elements 30 as shown in Fig. 4.

As to the female surface fastener 28, pile yarns formed of resin filaments manufactured from the flame-retardant resin material mentioned above may be interwoven in a pile pattern into a base part (base fabric) 29 produced by plain weaving the similar resin filaments so as to give rise to looped engaging elements 30 which protrude from the obverse side of the base part. Alternatively, the female surface fastener manufactured by weaving or knitting resin filaments made of another resin or a suitable resin material such as a biodegradable resin may be impregnated with the flame retardancy-imparting material mentioned above. A flame-retardant back coat layer may also be formed on the back surface of the female surface fastener 28, for the purpose of preventing the woven yarns from being frayed and imparting the flame retardancy thereto, by applying the flame retardancy-imparting material of the present invention mentioned above to impregnate or cover the surface fastener therewith or by laminating a sheet material of the flame retardancy-imparting material on the back surface.

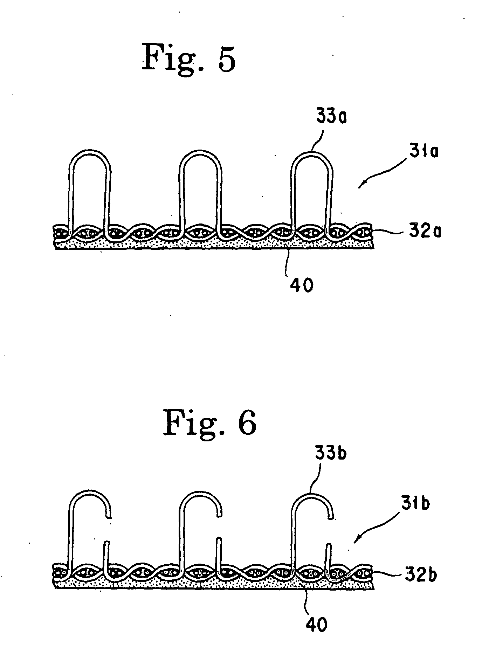

Fig. 5 and Fig. 6 show another embodiment of applying the present invention to the surface fastener.

In a female surface fastener 31a shown in Fig. 5, pile yarns formed of resin filaments are interwoven in a pile pattern into a base part (base fabric) 32a produced by plain weaving resin filaments so as to give rise to looped female engaging elements 33a which protrude from the obverse side of the base part. On the other hand, a male surface fastener 31b shown in Fig. 6 is identical in structure with the female surface fastener 31a mentioned above except that the loops are partially cut to form hooked male engaging elements 33b.

The flame-retardant back coat layers 40 are respectively formed on the back surfaces of the female surface fastener 31a and the male surface fastener 31b to prevent the woven yarns from being frayed and to impart the flame retardancy thereto. This back coat layer 40 is formed by applying the flame retardancy-imparting material of the present invention mentioned above to impregnate or cover the surface fastener therewith or by laminating the sheet material of the flame retardancy-imparting material thereon. Alternatively, in the case of a surface fastener already having a back coat layer formed from the other resin material, this back coat layer may be coated with the flame retardancy-imparting material of the present invention.

Now, the present invention will be described more specifically below with reference to working examples and comparative examples, but the present invention is not limited to such examples at all. Wherever the term "parts" is used hereinbelow, it shall refer to "parts by weight" unless otherwise specified.

### Example 1

Flame-retardant polyamide resin pellets comprising 100 parts of a polyamide resin and 10 parts of flame-retardants (25 wt.% of magnesium hydroxide, 50 wt.% of thermally expansible graphite, and 25 wt.% of melamine polyphosphate) were prepared by extruding this mixture by means of an extruder and cutting the extruded strand. The resultant pellets were processed into a fastener tape. A slide fastener stringer was prepared by using a coiled element made of the flame-retardant polyamide resin material having the same formulation as mentioned above, a coiled element made of a synthetic resin which does not contain the flame retardancy-imparting material at all, injection type elements obtained by injection molding the individual coupling elements from a synthetic resin and simultaneously attaching them fast to the edges of the fastener tapes, or the metal elements, as the coupling elements.

### Examples 2-8

The slide fastener stringers according to the present invention were prepared by repeating the procedure of Example 1 except that the amount of the flame-retardant was changed to those specified in Table 1. (The amount of the flame-retardant was 20 parts in Example 2, 30 parts in Example 3, 40 parts in Example 4, 50 parts in Example 5, 60 parts in Example 6, 70 parts in Example 7, and 100 parts in Example 8.)

### Examples 9-13

The slide fastener stringers according to the present invention were prepared by repeating the procedure of Example 1 except that the polyamide resin was changed to other resins of the kinds specified in Table 1.

### Comparative Example 1

A slide fastener stringer was prepared using the fastener tape made of only a polyamide resin which contains no flame-retardant.

### Test Example 1

Each of the slide fastener stringers prepared in Examples 1-13 and Comparative Example 1 mentioned above was subjected to the vertical test (heating time: 12 seconds) set forth in the Appendix F, Part I(b) specified in the U.S. Federal Regulations, Vol. 14 (14 CFR), Chapter 1, Part 25, §25.853. The results are shown in Table 1. Incidentally, the vertical test mentioned above was performed as follows.

### Testing Method:

### (1) Adjustment Conditions:

The test pieces were adjusted to 21±3°C (70±5°F) and 50 ±5% of relative humidity and kept at this environment for 24 hours or until the humidity reached the equilibrium.

### (2) Apparatus

The test was carried out in a cabinet without ventilation according to U.S. Federal Test Method, Standard 191, Model 5903 (revised method 5902) directed to the vertical test. Each test piece (length: 31.75 cm) was fitted in a metal frame of the testing apparatus to securely hold it with two long frames and an upper frame during the vertical test. (The exposed area of the test piece was at least 30.5cm (12 inches) in length.)

### (3) Vertical test

Three test pieces were subjected to the test and the average value was adopted. Each test piece was supported perpendicularly and exposed to a flame of a Bunsen burner equipped with a tube having an inside diameter of 0.95 cm (3/8 inch) and installed so that the test piece will come into contact with a flame of the height of 3.8 cm (1.5 inches). (The temperature of the flame measured by using a thermocouple pyrometer at the center of the flame was set at 843°C (1550°F) or more.) The lower end of the test piece was set at the position of 1.9 cm (3/4 inch) above the upper end of the burner. The flame was brought into contact with the central line of the lower end of the test piece, and the flame contacting time was 12 seconds.

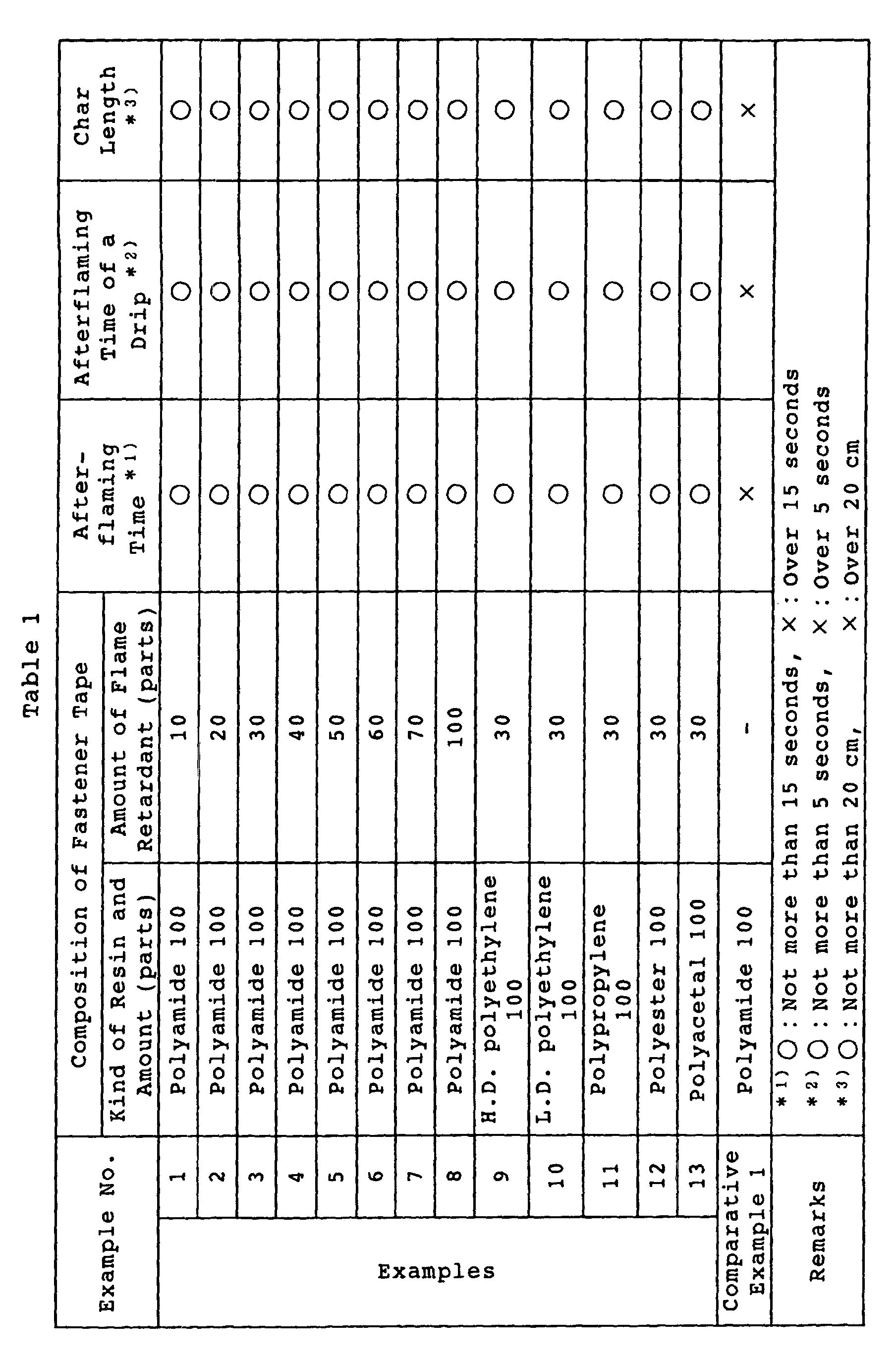

### Example 14

A polyester solution (main agent) containing flame-retardants dispersed therein was prepared by mixing flame-retardants (25 wt.% of magnesium hydroxide, 50 wt.% of thermally expansible graphite, and 25 wt.% of melamine polyphosphate) into a polyester resin solution as a main ingredient so as to account for 30 parts, based on 100 parts of two-pack type cross-linked polyurethane resin, and stirring the resultant mixture. A suitable amount of an isocyanate-based curing agent was added to the resultant polyester solution containing flame-retardants dispersed therein to prepare a solution destined to be applied to the back surface of a fastener tape.

The resultant solution was applied to the back surface of a fastener tape of about 100-400 g/m² manufactured from polyamide fibers at the ratio of 10-60 g/m², and then dried and cured to obtain a slide fastener stringer having flame retardancy imparted thereto.

### Examples 15-19

The slide fastener stringers according to the present invention were prepared by repeating the procedure of Example 14 except that the amount of the flame-retardant was changed to those specified in Table 2. (The amount of the flame-retardant was 40 parts in Example 15, 50 parts in Example 16, 60 parts in Example 17, 70 parts in Example 18, and 100 parts in Example 19.)

### Comparative Example 2

A slide fastener stringer was prepared by applying a thermosetting cross-linked polyurethane to the back surface of the fastener tape of about 100-400 g/m² manufactured from polyamide fibers at the ratio of 10-60 g/m², drying and then curing the coated polyurethane.

### Test Example 2

Each of the slide fastener stringers prepared in Examples 14-19 and Comparative Example 2 mentioned above was subjected to the vertical test (heating time: 12 seconds) set forth in the Appendix F, Part I(b) specified in the U.S. Federal Regulations, Vol. 14 (14 CFR), Chapter 1, Part 25, §25.853 in the same manner as in Test Example 1. The results are collectively shown in Table 2.

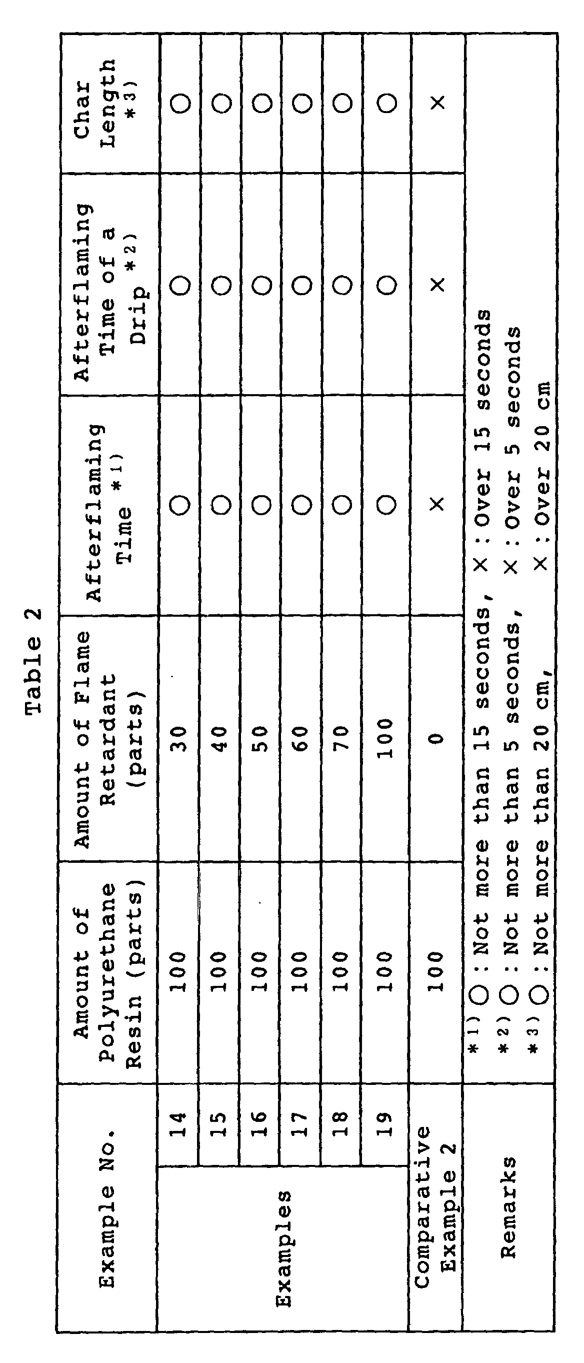

### Example 20

A flame-retardant resin sheet was prepared by kneading 100 parts of polypropylene and 30 parts of flame-retardants (25 wt.% of magnesium hydroxide, 50 wt.% of thermally expansible graphite, and 25 wt.% of melamine polyphosphate) by means of a twin-roll mill.

### Examples 21-24

The flame-retardant resin sheets were prepared by repeating the procedure of Example 20 except that the amount of the flame-retardant was changed to those specified in Table 3. (The amount of the flame-retardant was 40 parts in Example 21, 50 parts in Example 22, 60 parts in Example 23, and 70 parts in Example 24.)

### Examples 25-28

The flame-retardant resin sheets were prepared by repeating the procedure of Example 20 except that polypropylene was changed to other resins of the kinds specified in Table 3.

### Comparative Example 3

A resin sheet was prepared using only polypropylene which contains no flame-retardant.

### Test Example 3

Each of the resin sheets prepared in Examples 20-28 and Comparative Example 3 mentioned above was subjected to the vertical test (heating time: 12 seconds) set forth in the Appendix F, Part I(b) specified in the U.S. Federal Regulations, Vol. 14 (14 CFR), Chapter 1, Part 25, §25.853 in the same manner as in Test Example 1. As a test piece, however, a test piece (6.9 X 31.75 cm) obtained by cutting each resin sheet was used and the exposed area of the test piece was at least 5.1 cm (2 inches) in width and 30.5 cm (12 inches) in length.

The results are shown in Table 3.

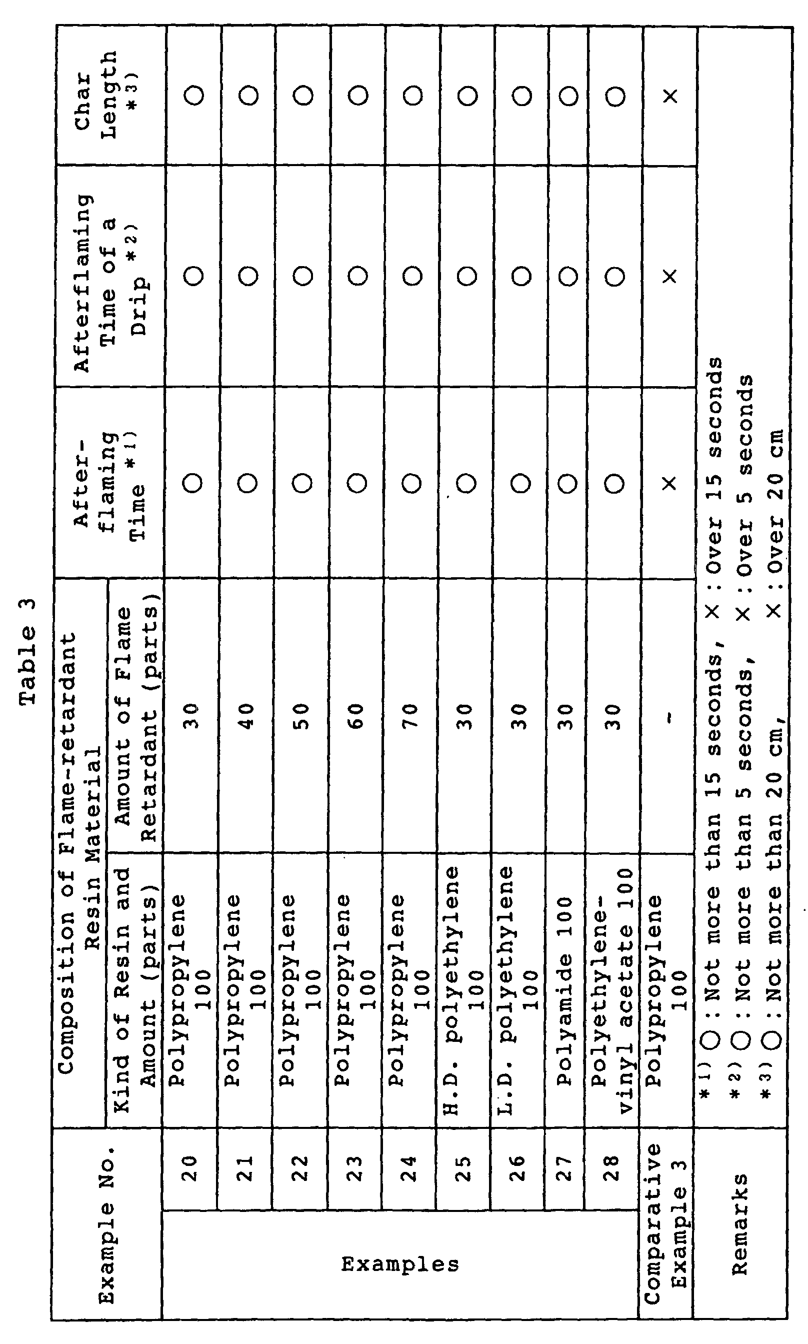

### Example 29

A flame-retardant surface fastener was prepared by laminating a flame-retardant polypropylene resin comprising 100 parts of polypropylene and 30 parts of flame-retardants (25 wt.% of magnesium hydroxide, 50 wt.% of thermally expansible graphite, and 25 wt.% of melamine polyphosphate) on the back surface of a surface fastener of about 300-400 g/m² manufactured from polyamide fibers at the ratio of 50-100 g/m² and back-coated with a thermosetting cross-linked polyurethane resin.

### Examples 30-34

The surface fasteners laminated with the flame-retardant resin according to the present invention were prepared by repeating the procedure of Example 29 except that the amount of the flame-retardant was changed to those specified in Table 4. (The amount of the flame-retardant was 40 parts in Example 30, 50 parts in Example 31, 60 parts in Example 32, 70 parts in Example 33, and 100 parts in Example 34.)

### Examples 35-38

The surface fasteners laminated with the flame-retardant resin according to the present invention were prepared by repeating the procedure of Example 29 except that polypropylene was changed to other resins of the kinds specified in Table 4.

### Examples 39-40

The surface fasteners laminated with the flame-retardant resin according to the present invention were prepared by repeating the procedure of Example 29 except that the amount of lamination of the laminated flame-retardant resin was changed to those specified in Table 4.

### Test Example 4

Each of the flame-retardant surface fasteners prepared in Examples 29-40 mentioned above was subjected to the vertical test (heating time: 12 seconds) set forth in the Appendix F, Part I(b) specified in the U.S. Federal Regulations, Vol. 14 (14 CFR), Chapter 1, Part 25, §25.853 in the same manner as in Test Example 3. The results are collectively shown in Table 4.

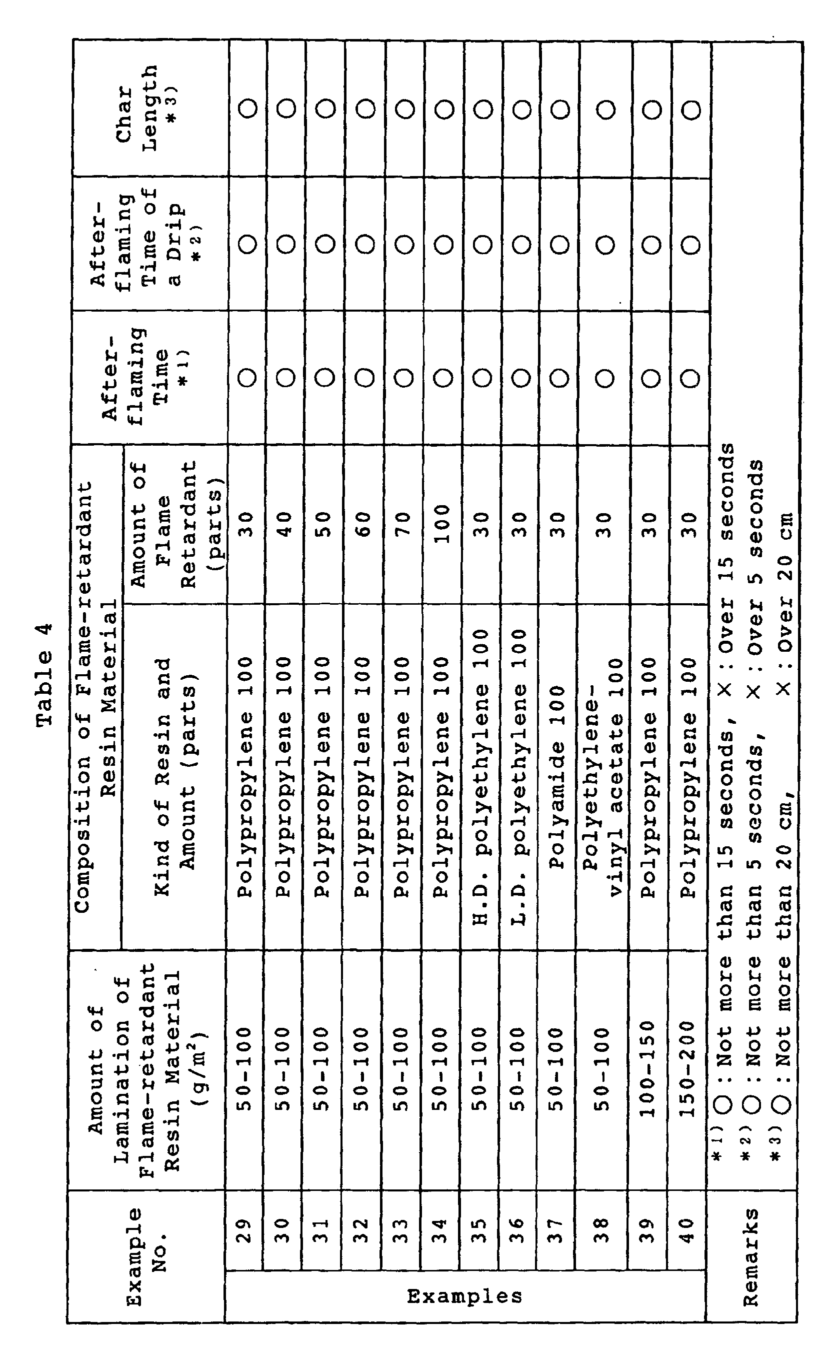

### Example 41

A polyester solution (main agent) containing flame-retardants dispersed therein was prepared by mixing 100 parts of a polyester resin which is a main ingredient of two-pack type cross-linked polyurethane resin to be used as a back coating agent with 20 parts of flame-retardants (25 wt.% of magnesium hydroxide, 50 wt.% of thermally expansible graphite, and 25 wt.% of melamine polyphosphate) and stirring the resultant mixture in the solution. A suitable amount of an isocyanate-based curing agent was added to the resultant polyester solution containing flame-retardants dispersed therein to prepare a back coating solution.

The resultant back coating solution was applied to the back surface of a surface fastener of about 300-400 g/m² manufactured from polyamide fibers at the ratio of 30-60 g/m² by means of a roll coater, and then dried and cured to obtain a surface fastener having flame retardancy imparted thereto.

### Examples 42-47

The flame-retardant surface fasteners according to the present invention were prepared by repeating the procedure of Example 41 except that the amount of the flame-retardant was changed to those specified in Table 5. (The amount of the flame-retardant was 30 parts in Example 42, 40 parts in Example 43, 50 parts in Example 44, 60 parts in Example 45, 70 parts in Example 46, and 100 parts in Example 47.)

### Comparative Example 4

A surface fastener of about 300-400 g/m² manufactured from polyamide fibers and back-coated with a thermosetting cross-linked polyurethane resin was prepared. Test Example 5

Each of the surface fasteners prepared in Examples 41-47 and Comparative Example 4 mentioned above was subjected to the vertical test (heating time: 12 seconds) set forth in the Appendix F, Part I(b) specified in the U.S. Federal Regulations, Vol. 14 (14 CFR), Chapter 1, Part 25, §25.853 in the same manner as in Test Example 3. The results are collectively shown in Table 5.

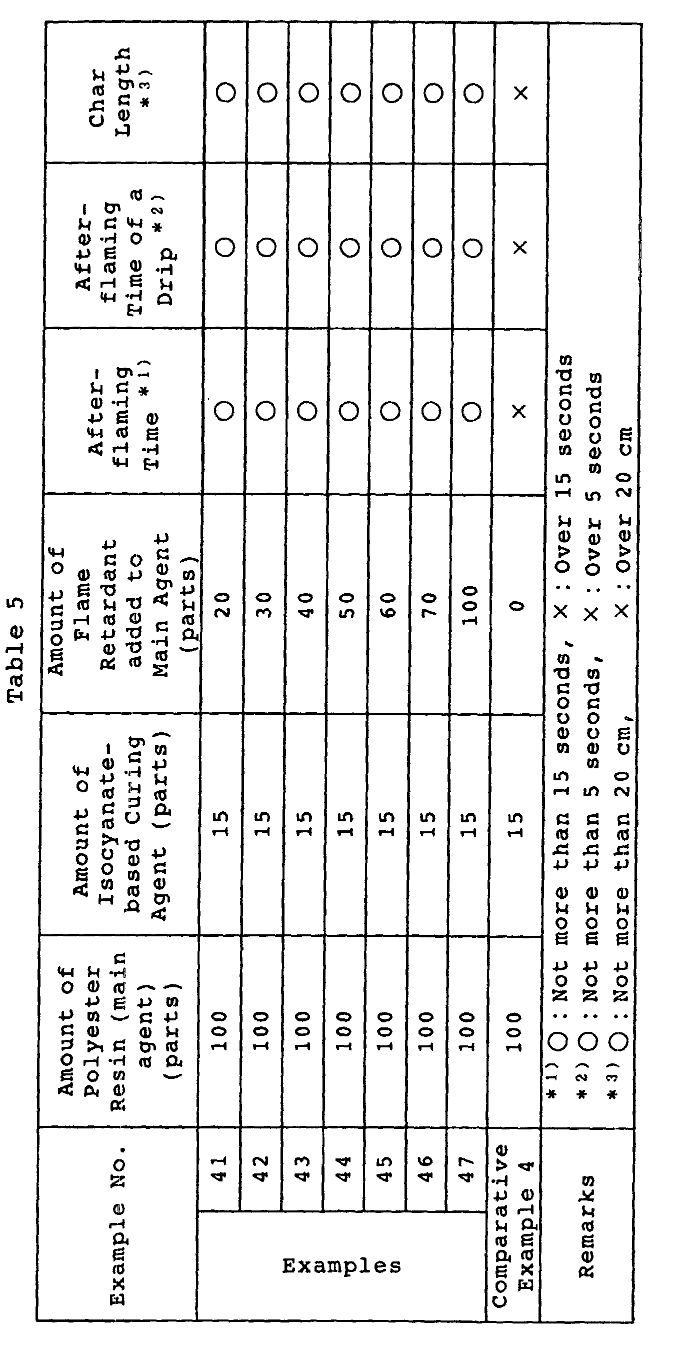

### Example 48

A flame retardancy-imparting material containing thermally expansible graphite dispersed therein was prepared by melting and mixing a thermoplastic polyurethane resin having the molecular weight of about 30,000 and destined to be used as a back coating agent with 35 parts of thermally expansible graphite in a mixer. The resultant polyurethane resin containing thermally expansible graphite dispersed therein was used as a back coating agent. This back coating agent was melted and applied to the back surface a surface fastener of about 300-400 g/m² manufactured from polyamide fibers in such a proportion that it might expand at the ratio of 0.5 cc per 1 cm² and then cooled to obtain the surface fastener having flame retardancy imparted thereto. The resultant surface fastener having flame retardancy imparted thereto had both a good feeling of touch and a good feeling of use.

### Examples 49-51

The surface fasteners having flame retardancy imparted thereto were prepared by repeating the procedure of Example 48 except that the amount of application of the flame retardancy-imparting material was changed so as to give the expansion amounts specified in Table 6. Each of the resultant surface fasteners having flame retardancy imparted thereto had both a good feeling of touch and a good feeling of use.

### Comparative Example 5

As a back coating agent, a thermoplastic polyurethane resin having the molecular weight of about 30,000 and containing no flame-retardant was used. This resin was melted and applied to the back surface a surface fastener of about 300-400 g/m² manufactured from polyamide fibers and then cooled to obtain the surface fastener.

### Test Example 6

Each of the surface fasteners prepared in Examples 48-51 and Comparative Example 5 mentioned above was subjected to the vertical test (heating time: 12 seconds) set forth in the Appendix F, Part I(b) specified in the U.S. Federal Regulations, Vol. 14 (14 CFR), Chapter 1, Part 25, §25.853 in the same manner as in Test Example 3. The results are shown in Table 6.

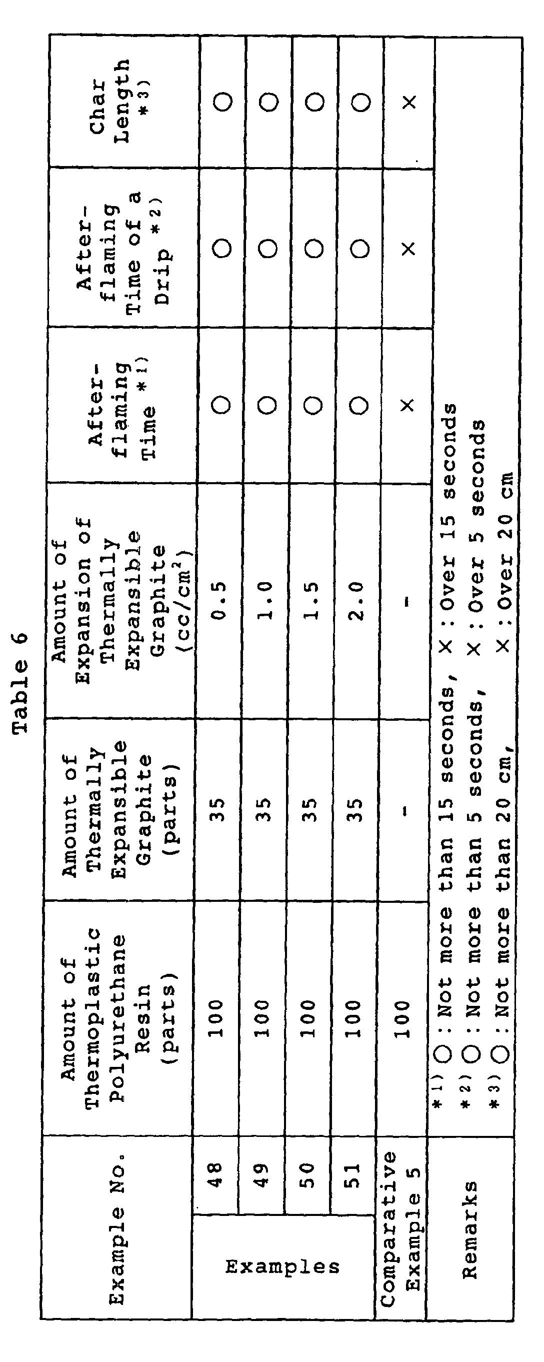

### Example 52

A polyester resin (main agent) containing flame-retardants dispersed therein was prepared by mixing 100 parts of a polyester resin which is a main ingredient of two-pack type cross-linked polyurethane resin destined to be used as a back coating agent with 45 parts of thermally expansible graphite and stirring the resultant mixture in the solution. A suitable amount of an isocyanate-based curing agent was added to the resultant polyester resin containing the flame-retardant dispersed therein to prepare a flame retardancy-imparting material. The resultant flame retardancy-imparting material was used as a back coating solution. (At this time, a diluent such as an organic solvent may be added to the solution, if need be.)

This back coating solution was applied to the back surface of a surface fastener of about 300-400 g/m² manufactured from polyamide fibers by means of a roll coater in such a proportion that it might expand at the ratio of 0.5 cc per 1 cm², and then dried and cured to obtain a surface fastener having flame retardancy imparted thereto with the molecular weight between cross-linkages of cross-linked polyurethane of about 500-20,000. The resultant surface fastener having flame retardancy imparted thereto had both a good feeling of touch and a good feeling of use.

### Examples 53-55

The surface fasteners having flame retardancy imparted thereto were prepared by repeating the procedure of Example 52 except that the amount of application of the flame retardancy-imparting material was changed so as to give the expansion amounts specified in Table 7. Each of the resultant surface fasteners having flame retardancy imparted thereto had both a good feeling of touch and a good feeling of use.

### Comparative Example 6

A two-pack type cross-linked polyurethane resin comprising 100 parts of a polyester resin containing no flame-retardant and a suitable amount of an isocyanate-based curing agent, as a back coating agent, was applied to the back surface a surface fastener of about 300-400 g/m² manufactured from polyamide fibers, dried and then cured to obtain the surface fastener with the molecular weight between cross-linkages of cross-linked polyurethane of about 500-20,000.

### Test Example 7

Each of the flame-retardant surface fasteners prepared in Examples 52-55 and Comparative Example 6 mentioned above was subjected to the vertical test (heating time: 12 seconds) set forth in the Appendix F, Part I(b) specified in the U.S. Federal Regulations, Vol. 14 (14 CFR), Chapter 1, Part 25, §25.853 in the same manner as in Test Example 3. The results are shown in Table 7.

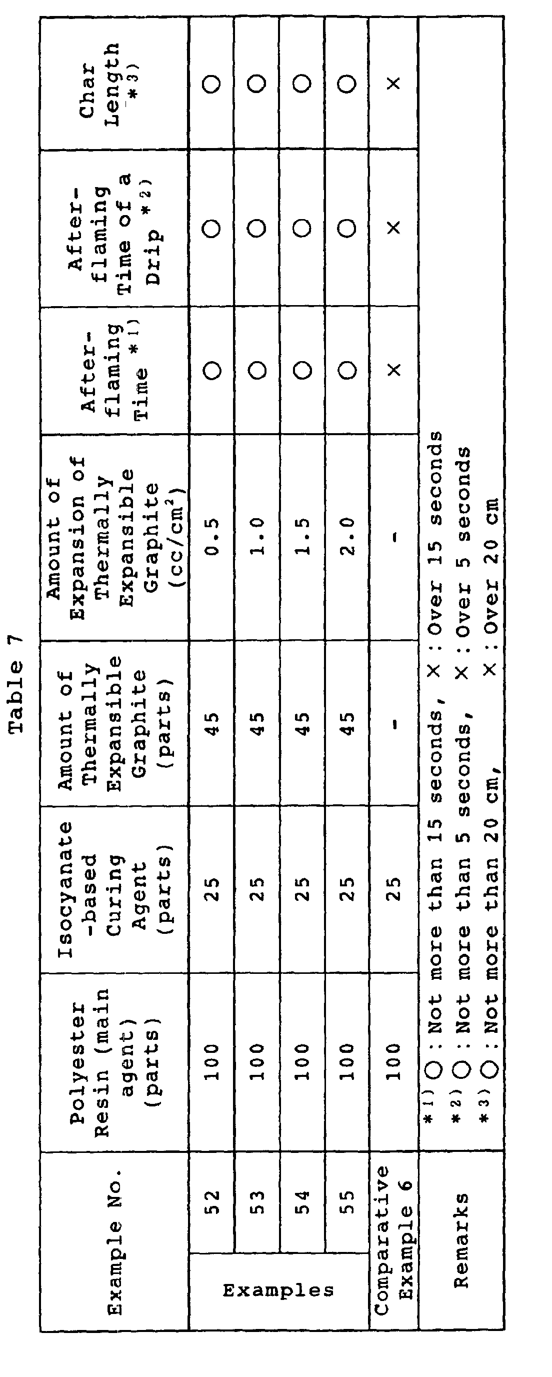

### Industrial Applicability

As described above, the flame-retardant product (a molded article and a fabric product) of the present invention exhibits the flame retardancy excellent in self-extinguishing properties, i.e. the afterflaming time of not more than 15 seconds, the afterflaming time of a flaming drip of not more than 5 seconds, and the char length of not more than 20 cm in the vertical test (heating time: 12 seconds) set forth in the Appendix F, Part I(b) specified in the U.S. Federal Regulations, Vol. 14 (14 CFR), Chapter 1, Part 25, §25.853. Accordingly, when a fire breaks out, it has not only the effect of suppressing the flame spread but also, unlike the conventional halogen-containing high polymers and the materials which contain the halogen-based flame-retardant, no possibility of generating a detrimental gas, such as dioxin, at the time of combustion because any halogen compound is not used as a material, and thus it is extremely excellent also in safety. Therefore, it is useful as various flame-retardant fabric products and flame-retardant fastening products or parts such as surface fasteners, slide fasteners, and resin buttons to be used for fixation of these fabric products.

## Claims

1. A flame-retardant product, such as a molded article and a fabric product, which is made of a flame retardancy-imparting material or which contains or/and is coated with the flame retardancy-imparting material, **characterized in that** said flame retardancy-imparting material comprises a synthetic resin and a flame-retardant containing an inorganic flame-retardant, wherein said flame-retardant is contained in the synthetic resin in an amount of 1 to 400 parts by weight, based on 100 parts by weight of the synthetic resin, and is dispersed in the synthetic resin.

2. The flame-retardant product according to claim 1, wherein said product is a flame-retardant molded article which is made of the flame retardancy-imparting material or contains or/and is coated with the flame retardancy-imparting material, **characterized in that** said flame retardancy-imparting material comprises a synthetic resin and a flame-retardant contained therein in an amount of 1 to 400 parts by weight, based on 100 parts by weight of the synthetic resin, wherein the flame-retardant contains at least one member selected from the group consisting of hydrated metallic compounds and thermally expansible graphite and is dispersed in the synthetic resin.

3. The flame-retardant product according to claim 1, wherein said product is a flame-retardant fabric product which has a fibrous base fabric containing or/and coated with the flame retardancy-imparting material, **characterized in that** said flame retardancy-imparting material comprises a synthetic resin and a flame-retardant contained therein in an amount of 1 to 400 parts by weight, based on 100 parts by weight of the synthetic resin, wherein the flame-retardant contains at least one member selected from the group consisting of hydrated metallic compounds and thermally expansible graphite and is dispersed in the synthetic resin.

4. The flame-retardant product according to any one of claims 1 to 3, **characterized in that** it exhibits an afterflaming time of not more than 15 seconds, an afterflaming time of a flaming drip of not more than 5 seconds, and a char length of not more than 20 cm in the vertical test (heating time: 12 seconds) set forth in the Appendix F, Part I(b) specified in the U.S. Federal Regulations, Vol. 14 (14 CFR), Chapter 1, Part 25, §25.853.

5. The flame-retardant product according to any one of claims 1 to 3, **characterized in that** it exhibits an afterflaming time of not more than 12 seconds, an afterflaming time of a flaming drip of not more than 4 seconds, and a char length of not more than 16 cm in the vertical test (heating time: 12 seconds) set forth in the Appendix F, Part I(b) specified in the U.S. Federal Regulations, Vol. 14 (14 CFR), Chapter 1, Part 25, §25.853.

6. The flame-retardant product according to any one of claims 1 to 5, **characterized in that** said synthetic resin is polyolefin.

7. The flame-retardant product according to any one of claims 1 to 5, **characterized in that** said synthetic resin is a thermosetting resin.

8. The flame-retardant product according to any one of claims 1 to 5, **characterized in that** said synthetic resin is at least one member selected from the group consisting of a cross-linked polyurethane resin, a cross-linked polyester resin, a cross-linked epoxy resin, a cross-linked acrylic resin, and a cross-linked copolymerized nylon resin.

9. The flame-retardant product according to any one of claims 1 to 8, **characterized in that** said flame-retardant contains at least thermally expansible graphite.

10. The flame-retardant product according to claim 9, **characterized in that** the expansion starting temperature of said thermally expansible graphite is lower than the melting point of the base fabric made of fibers.

11. The flame-retardant product according to any one of claims 1 to 8, **characterized in that** said flame-retardant contains at least one hydrated metallic compound selected from the group consisting of aluminum hydroxide, magnesium hydroxide, and calcium hydroxide together with thermally expansible graphite.

12. The flame-retardant product according to any one of claims 1 to 8, **characterized in that** said flame-retardant contains at least one hydrated metallic compound selected from the group consisting of aluminum hydroxide, magnesium hydroxide, and calcium hydroxide, thermally expansible graphite, and at least one phosphorus compound selected from the group consisting of melamine polyphosphate, melamine phosphate, ammonium polyphosphate, and guanidine phosphate.

13. The flame-retardant product according to any one of claims 1 to 8, **characterized in that** said flame-retardant contains three species; magnesium hydroxide, thermally expansible graphite, and melamine polyphosphate.

14. The flame-retardant product according to any one of claims 1 to 13, **characterized in that** a surface of the flame-retardant is coated with an organic substance and/or an inorganic substance.

15. The flame-retardant product according to any one of claims 1 to 14, **characterized in that** a surface of the molded article is coated with the flame retardancy-imparting material by lamination thereof.

16. The flame-retardant product according to any one of claims 1 to 15, **characterized in that** the molded article is a component part of a slide fastener.

17. The flame-retardant product according to any one of claims 1 to 15, **characterized in that** the molded article is a combined article comprising at least two component parts of a fastener tape, a row of coupling elements, a stop member, a pin-and-box separator, a slider, and a reinforcing sheet of a slide fastener.

18. The flame-retardant product according to any one of claims 1 to 15, **characterized in that** the molded article is a molded surface fastener having a plurality of engaging elements projected from a base part thereof, which will make engagement and disengagement with an opposite surface fastener.

19. The flame-retardant product according to any one of claims 1 to 14, **characterized in that** the fabric product comprises a base fabric made of fibers of which back surface is impregnated or/and coated with the flame retardancy-imparting material as a back coating agent.

20. The flame-retardant product according to any one of claims 1 to 14, **characterized in that** the fabric product comprises a base fabric made of fibers of which back surface is coated with the flame retardancy-imparting material by lamination thereof.

21. The flame-retardant product according to any one of claims 1 to 14, 19 and 20, **characterized in that** the fabric product is a surface fastener made of fibers and having a plurality of engaging elements projected from a base fabric made of fibers, which will make engagement and disengagement with an opposite surface fastener.

22. The flame-retardant product according to any one of claims 1 to 14, 19 and 20, **characterized in that** the fabric product is a fastener tape of a slide fastener.
